# EUROPÄISCHE PATENTSCHRIFT

(11) **EP 0 950 512 B1**
(45) Veröffentlichungstag und Bekanntmachung des Hinweises auf die Patenterteilung: **12.06.2002**
(21) Anmeldenummer: 98101353.5
(22) Anmeldetag: 27.01.1998
(51) Int. Cl.: B32B 31/16, B32B 27/02

(54) **Verfahren zum Herstellen einer Verbundbahn**
Method for producing a laminated web
Procédé pour la production d'une bande stratifiée

(43) Veröffentlichungstag der Anmeldung: 20.10.1999
(73) Patentinhaber: Reifenhäuser GmbH & Co. Maschinenfabrik, 53839 Troisdorf (DE)
(72) Erfinder: Schulz, Herbert, 53840 Troisdorf (DE); Ott, Dieter, 53757 Sankt Augustin (DE); Deuerling, Michael, 53919 Weilerswist (DE)
(74) Vertreter: Honke, Manfred, Dr.-Ing.

(56) Entgegenhaltungen:
- WO-A-97/29909
- DE-A- 3 822 297
- DE-A- 19 534 702
- GB-A- 2 290 052
- PATENT ABSTRACTS OF JAPAN vol. 097, no. 011, 28.November 1997 & JP 09 187897 A (TORAY IND INC), 22.Juli 1997,
- PATENT ABSTRACTS OF JAPAN vol. 015, no. 039 (M-1075), 30.Januar 1991 & JP 02 276636 A (SUMITOMO CHEM CO LTD), 13.November 1990,

## Beschreibung

Die Erfindung betrifft ein Verfahren zum Herstellen einer Verbundbahn aus einer in Längs- und Querrichtung biaxial verstreckten Nonwoven-Vliesbahn aus Kunststoff-Filamenten und/oder Kunststoff-Fasern aus thermoplastischem Kunststoff und aus einer einseitigen Beschichtung und Kunststoff-Folie aus thermoplastischem Kunststoff im Durchlauf, wobei die Nonwoven-Vliesbahn aus den Kunststoff-Filamenten und/oder Kunststoff-Fasern erzeugt, vor der Zuführung auf eine Verbundwalze auf eine unterhalb ihrer Schmelztemperatur liegende Temperatur vorgewärmt und dem Auflaufbereich einer Verbundwalze zugeführt wird, die entsprechend der Durchlaufgeschwindigkeit rotiert und zumindest die Breite der Nonwoven-Vliesbahn aufweist, wobei die Kunststoff-Folie mit Hilfe einer Breitschlitzdüse deren Schlitzmund im Auflaufbereich der Verbundwalze angeordnet ist, aus einer Schmelze des thermoplastischen Kunststoffes erzeugt, im jungfräulichen plastischen Zustand im wesentlichen tangential mit einer Temperatur von 180 bis 240 °C mit der auf der Verbundwalze aufliegenden Nonwoven-Vliesbahn in Berührungskontakt gebracht und dabei mit Hilfe zumindest einer sich quer zur Durchlaufrichtung erstreckenden Elektronen-Sprühelektrode elektrostatisch aufgeladen wird, und wobei die Verbundbahn nach Verlassen der Verbundwalze auf Raumtemperatur abgekühlt wird.

Im Rahmen von bekannten Maßnahmen der genannten Art (DE 195 34 702 A1), bei denen die elktrostatische Aufladung bzw. die dadurch entstehende Feldkraft die Kunststoff-Folie in die Nonwoven-Vliesbahn drückt, wird die biaxiale Verstreckung der Nonwoven-Vliesbahn vor deren Zuführung auf die Verbundwalze durchgeführt, so daß die nachfolgend aufgebrachte Kunststoff-Folie unverstreckt bleibt. Die beschriebenen Maßnahmen haben sich in der Praxis bewährt, ergeben jedoch Probleme, wenn die auf die Nonwoven-Vliesbahn aufzukaschierende Kunststoff-Folie besonders dünn sein muß, z. B. um Atmungsaktivität bzw. bestimmte Gaspermeabilitätswerte zu erreichen. Zum einen ist nämlich die Manipulation extrem dünner flüssiger Kunststoff-Folienbahnen ohne Reißen derselben praktisch unmöglich, zum anderen ergibt sich ein verhältnismäßig schlechter Verbund zwischen Nonwoven-Vliesbahn und Kunststoff-Folie, weil aufgrund der geringen Wärmekapazität der Kunststoff-Folie keine hinreichenden Verbundtemperaturen erzielt werden. Das dann an sich naheliegende Aufkalandrieren der Kunststoff-Folie führt ebenfalls nicht zum Erfolg, weil die Kunststoff-Folie beim Aufkalandrieren im Bereich der Bondingpunkte zerstört wird.

Bei einem anderen Verfahren, bei dem die Nonwoven-Vliesbahn im kalten Zustand und die Kunststoff-Folie ohne elektrostatische Aufladung dem Walzenspalt eines die Verbundwalze umfassenden Kalanderwalzenpaares zugeführt werden, ist es zwar auch schon bekannt (WO 97/29 909), die Verbundbahn nach dem Verlassen der Verbundwalze bei Raumtemperatur in Längs- und Querrichtung biaxial zu verstrecken. Die oben geschilderten Probleme um die dünnen Kunststoff-Folien treten jedoch auch hier auf.

Der Erfindung liegt das technische Problem zugrunde, im Rahmen der Maßnahmen der eingangs genannten Art zu technisch einwandfreien Verbundbahnen mit besonders dünner Kunststoff-Folie zu gelangen bzw. atmungsaktive Verbunde herzustellen.

Die erfindungsgemäße Lösung dieser Aufgabe besteht darin, daß die Verbundbahn nach dem Verlassen der Verbundwalze und vor dem Abkühlen auf Raumtemperatur noch aus der Verbundwärme heraus in Längs- und Querrichtung bei einer Temperatur von 80 bis 150 °C biaxial verstreckt wird.

Die Erfindung geht hierbei von der Erkenntnis aus, daß die bisher auftretenden Probleme um die besonders geringe Stärke der Kunststoff-Folie umgangen werden können, indem die biaxiale Verstreckung nicht mehr vor dem Verbund nur an der Nonwoven-Vliesbahn, sondern nach dem Verbund an der Verbundbahn vollzogen wird. Beim Aufkaschieren der stärkeren Kunststoff-Folie liegen wie bisher optimale Verhältnisse für einen einwandfreien Verbund zwischen Nonwoven-Vliesbahn und Kunststoff-Folie vor, weil die Wärmekapazität der Kunststoff-Folie ausreicht, um die Kunststoff-Filamente bzw. -Fasern der Nonwoven-Vliesbahn hinreichend anzuschmelzen. Auf der anderen Seite bereitet es überraschenderweise keine Probleme, die Kunststoff-Folie im Verbund mit der Nonwoven-Vliesbahn auf besonders geringe Stärken herunterzuverstrecken; Stärken von erheblich weniger als 20 µm sind ohne weiteres möglich. Dabei muß die Verbundbahn für die biaxiale Verstreckung noch ausreichende Verstreckungstemperatur aufweisen; liegt zwischen Verbund und biaxialer Verstreckung eine zu große Zeitspanne muß ggf. entsprechend nachgewärmt werden. Im Ergebnis erhält man mit den erfindungsgemäßen Maßnahmen einwandfreie Verbundbahnen mit kleinen Flächengewichten und besonders dünnen Kunststoff-Folien, wie z. B. für atmungsaktive Artikel auf dem Hygienesektor gewünscht werden.

Für die weitere Ausgestaltung bestehen im Rahmen der Erfindung mehrere Möglichkeiten. Grundsätzlich können eine Vielzahl von Kunststoffen für die Nonwoven-Vliesbahn und die Kunststoff-Folie eingesetzt werden. Vorzugsweise wird jedoch die Nonwoven-Vliesbahn aus PP-Homopolymer und die Kunststoff-Folie aus PP-Homopolymer und/oder PP-Copolymer hergestellt. Dem thermoplastischen Kunststoff der Kunststoff-Folie können dabei noch Zusatzstoffe in Form von PP-Elastomerblends, LLDPE und/oder die Folienstruktur beeinflussenden Füllstoffen beigegeben werden.

Die Verbundbahn wird nach bevorzugter Ausführungsform sowohl in Längsrichtung als auch in Querrichtung um 100 bis 400 % biaxial verstreckt. Jedenfalls empfiehlt es sich, die Verbundbahn nach der biaxialen Verstreckung zu thermofixieren, und zwar vorzugsweise mit Heißluft bei Temperaturen von 180° bis 200°C.

Im folgenden wird die Erfindung anhand einer ein Ausführungsbeispiel darstellenden Zeichnung mit einer Zeichnungsfigur erläutert.

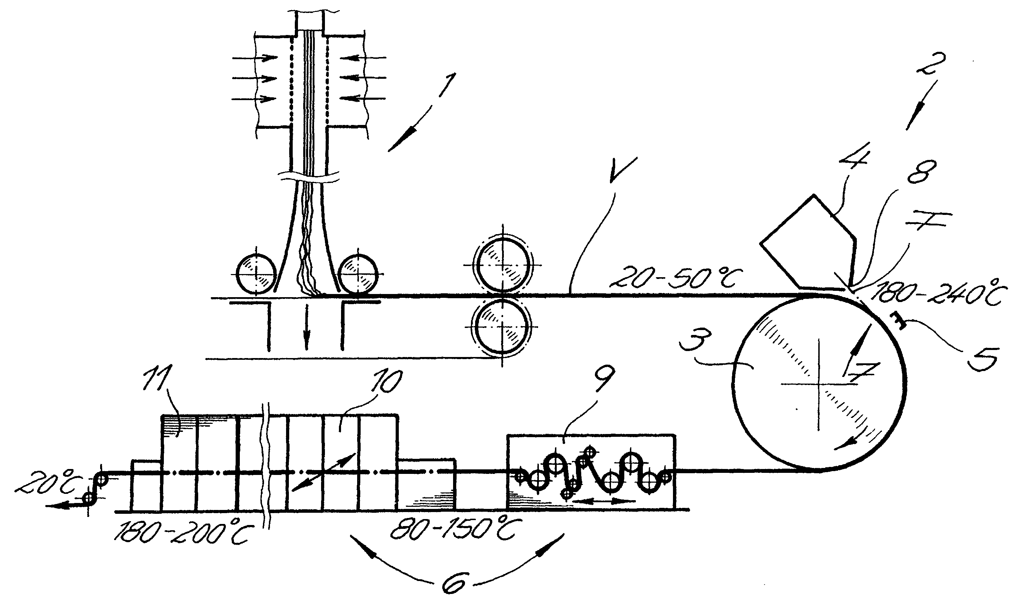

Die einzige Zeichnungsfigur zeigt in einer schematischen Seitenansicht eine Anlage zum Herstellen einer Verbundbahn aus einer Nonwoven-Vliesbahn V aus Kunststoff-Filamenten und/oder Kunststoff-Fasern aus thermoplastischem Kunststoff und aus einer einseitigen Beschichtung aus Kunststoff-Folie F aus thermoplastischem Kunststoff im Durchlauf. Man erkennt in Durchlaufrichtung ein Aggregat 1 zum Herstellen von Kunststoff-Filamenten und Legen derselben zur Nonwoven-Vliesbahn V, ein Verbundaggregat 2 aus einer Verbundwalze 3 mit Breitschlitzdüse 4 und zumindest einer Elektronen-Sprühelektrode 5 und ein dem Verbundaggregat 2 nachgeschaltetes Reckwerk 6 zum biaxialen Verstrecken der Verbundbahn.

Die aus den Kunststoff-Filamenten erzeugte Nonwoven-Vliesbahn V wird dem Auflaufbereich 7 der Verbundwalze 3 zugeführt, die entsprechend der Durchlaufgeschwindigkeit rotiert und zumindest die Breite der Nonwoven-Vliesbahn V aufweist. Die Kunststoff-Folie F wird mit Hilfe der Breitschlitzdüse 4, deren Schlitzmund 8 im Auflaufbereich 7 der Verbundwalze 3 angeordnet ist, aus einer Schmelze des thermoplastischen Kunststoffes erzeugt, im jungfräulichen plastischen Zustand im wesentlichen tangential mit der auf der Verbundwalze 3 aufliegenden Nonwoven-Vliesbahn V in Berührungskontakt gebracht und dabei mit Hilfe der sich quer zur Durchlaufrichtung erstreckenden Elektronen-Sprühelektrode 5 elektrostatisch aufgeladen. Nach dem Verlassen der Verbundwalze 3 wird die Verbundbahn noch aus der Verbundwärme heraus in Längs- und Querrichtung biaxial verstreckt, was durch Doppelpfeile angedeutet ist. In der Figur erkennt man die beiden Teile 9, 10 des Reckwerkes zum Verstrecken in Längsrichtung einerseits und in Querrichtung andererseits. Die Verstreckung und Längs- und Querrichtung macht jeweils 100 bis 400 % aus. Nach der biaxialen Verstreckung wird im Aggregat 11 mit Heißluft thermofixiert.

Die Nonwoven-Vliesbahn V wird im Ausführungsbeispiel aus Polypropylen-Homopolymer und die Kunststoff-Folie aus Polypropylen-Homopolymer oder Copolymer hergestellt. Dem thermoplastischen Kunststoff der Kunststoff-Folie sind dabei Zusatzstoffe in Form von Polypropylen-Elastomerblends, linear strukturiertem Polyäthylen niedriger Dichte und/oder die Folienstruktur beeinflussenden Zusatzstoffen beigegeben. Die Temperaturen, die die Nonwoven-Vliesbahn, die Kunststoff-Folie und die Verbundbahn in den einzelnen Stationen einnehmen, sind in der Figur angegeben.

## Patentansprüche

1. Verfahren zum Herstellen einer Verbundbahn aus einer in Längs- und Querrichtung biaxial verstreckten Nonwoven-Vliesbahn (V) aus Kunststoff-Filamenten und/oder Kunststoff-Fasern aus thermoplastischem Kunststoff und aus einer einseitigen Beschichtung aus Kunststoff-Folie (F) aus thermoplastischem Kunststoff im Durchlauf, wobei die Nonwoven-Vliesbahn (V) aus Kunststoff-Filamenten und/oder Kunststoff-Fasern erzeugt, vor der Zuführung auf eine Verbundwalze (3) auf eine unterhalb ihrer Schmelztemperatur liegende Temperatur vorgewärmt und dem Auflaufbereich (7) der Verbundwalze (3) zugeführt wird, die entsprechend der Durchlaufgeschwindigkeit rotiert und zumindest die Breite der Nonwoven-Vliesbahn (V) aufweist, wobei die Kunststoff-Folie (F) mit Hilfe einer Breitschlitzdüse (4), deren Schlitzmund(8) im Auflaufbereich (7) der Verbundwalze (3) angeordnet ist, aus einer Schmelze des thermoplastischen Kunststoffes erzeugt, im jungfräulichen plastischen Zustand im wesentlichen tangential mit einer Temperatur von 180 bis 240 °C mit der auf der Verbundwalze (3) aufliegenden Nonwoven-Vliesbahn (V) in Berührungskontakt gebracht und dabei mit Hilfe zumindest einer sich quer zur Durchlaufrichtung erstreckenden Elektronen-Sprühelektrode (5) elektrostatisch aufgeladen wird, und wobei die Verbundbahn nach Verlassen der Verbundwalze (3) auf Raumtemperatur abgekühlt wird, **dadurch gekennzeichnet, daß** die Verbundbahn nach dem Verlassen der Verbundwalze (3) und vor dem Abkühlen auf Raumtemperatur noch aus der Verbundwärme heraus in Längs- und Querrichtung bei einer Temperatur von 80 bis 150 °C biaxial verstreckt wird.

2. Verfahren nach Anspruch 1, **dadurch gekennzeichnet, daß** die Nonwoven-Vliesbahn (V) aus PP-Homopolymer und die Kunststoff-Folie (F) aus PP-Homopolymer und/oder PP-Copolymer hergestellt wird.

3. Verfahren nach Anspruch 2, **dadurch gekennzeichnet, daß** dem thermoplastischen Kunststoff der Kunststoff-Folie (F) Zusatzstoffe in Form von PP-Elastomerblends, LLDPE und/oder die Folienstruktur beeinflussende Füllstoffe beigegeben werden.

4. Verfahren nach einem der Ansprüche 1 bis 3, **dadurch gekennzeichnet, daß** die Verbundbahn sowohl in Längsrichtung als auch in Querrichtung um 100 bis 400 % biaxial verstreckt wird.

5. Verfahren nach einem der Ansprüche 1 bis 4, **dadurch gekennzeichnet, daß** die Verbundbahn nach der biaxialen Verstreckung thermofixiert wird.

6. Verfahren nach Anspruch 5, **dadurch gekennzeichnet, daß** die Verbundbahn bei einer Temperatur von 180 bis 200°C mit Heißluft thermofixiert wird.

## Claims

1. A method of continuously producing a composite length comprising a nonwoven felt length (V) which is biaxially stretched in its longitudinal and transverse directions and which is made of plastics filaments and/or of plastics fibres comprising a thermoplastic plastics material, and comprising a coating on one side formed from a plastics film (F) made of a thermoplastic plastics material, wherein the non-woven felt length (V) is produced from plastics filaments and/or plastics fibres, is preheated to a temperature below its melting temperature before being fed to a bonding roll (3) and is fed to the run-on region (7) of the bonding roll (3), which rotates corresponding to the rate of throughput and is at least as wide as the non-woven felt length (V), wherein the plastics film (F) is produced, by means of a slit die (4), the slit orifice (8) of which is disposed in the run-on region (7) of the bonding roll (3), from a melt of the thermoplastic plastics material, and is brought into contact substantially tangentially, in its virgin plastic state and at a temperature of 180 to 240°C, with the non-woven felt length (V) resting on the bonding roll (3), and in the course of this procedure is electrostatically charged by means of at least one electron emission electrode (5) which extends transversely to the direction of throughput, and wherein the composite length is cooled to room temperature after it leaves the bonding roll (3), **characterised in that** after leaving the bonding roll (3), when it is out of the heat of bonding but before it is cooled to room temperature, the composite length is biaxially stretched in its longitudinal and transverse directions at a temperature of 80 to 150°C.

2. A method according to claim 1, **characterised in that** the non-woven felt length (V) is produced from a PP homopolymer and the plastics film (F) is produced from a PP homopolymer and/or a PP copolymer.

3. A method according to claim 2, **characterised in that** additives in the form of PP elastomer blends, LLDPE, and/or fillers which the influence the film structure, are admixed with the thermoplastic plastics material of the plastics film (F).

4. A method according to any one of claims 1 to 3, **characterised in that** the composite length is biaxially stretched by 100 to 400 % both in its longitudinal direction and in its transverse direction.

5. A method according to any one of claims 1 to 4, **characterised in that** the composite length is thermofixed after biaxial stretching.

6. A method according to claim 5, **characterised in that** the composite length is thermofixed with hot air at a temperature of 180 to 200°C.

## Revendications

1. Procédé de fabrication en continu d'une bande composite constituée d'une bande de non-tissé (V), étirée biaxialement dans la direction longitudinale et la direction transversale, de filaments de matière plastique et/ou de fibres de matière plastique en matière thermoplastique, ainsi que d'un revêtement sur une face d'une feuille de matière plastique (F) en matière thermoplastique, dans lequel la bande de non-tissé (V) est produite à partir de filaments de matière plastique et/ou de fibres de matière plastique, est préchauffée à une température inférieure à sa température de fusion avant d'être amenée sur le cylindre de liaison (3), et est amenée à la zone d'entrée (7) du cylindre de liaison (3) qui tourne en fonction de la vitesse de passage et qui présente au moins la largeur de la bande de non-tissé (V), dans lequel la feuille de matière plastique (F) est produite, à l'aide d'une buse à fente large (4) dont l'embouchure de fente (8) est disposée dans la zone d'entrée (7) du cylindre de liaison (3), à partir de la matière thermoplastique fondue, est amenée, à l'état plastique vierge, à une température de 180 à 240 °C, sensiblement tangentiellement, en contact physique avec la bande de non-tissé (V) reposant sur le cylindre de liaison (3), et ce faisant est chargée électrostatiquement à l'aide d'au moins une électrode de pulvérisation d'électrons (5) s'étendant transversalement à la direction de passage, et dans lequel la bande composite est refroidie à la température ambiante après sortie du cylindre de liaison (3), **caractérisé en ce que** la bande composite, après sa sortie du cylindre de liaison (3) et avant le refroidissement à la température ambiante, est étirée biaxialement, à partir de la chaleur de liaison, dans la direction longitudinale et la direction transversale, à une température de 80 à 150 °C.

2. Procédé selon la revendication 1, **caractérisé en ce que** la bande de non-tissé (V) est fabriquée à partir d'homopolymères-PP et la feuille plastique (F) à partir d'homopolymères de PP et/ou de copolymères de PP.

3. Procédé selon la revendication 2, **caractérisé en ce qu'**on ajoute à la matière thermoplastique de la feuille de matière plastique (F) des additifs sous la forme de mélanges élastomères-PP, de LLDPE et/ou des charges influençant la structure de la feuille.

4. Procédé selon l'une des revendications 1 à 3, **caractérisé en ce que** la bande composite est étirée biaxialement aussi bien dans la direction longitudinale que dans la direction transversale, de 100 à 400 %.

5. Procédé selon l'une des revendications 1 à 4, **caractérisé en ce qu'**après l'étirement biaxial, la bande composite est thermofixée.

6. Procédé selon la revendication 5, **caractérisé en ce que** la bande composite est thermofixée avec de l'air chaud, à une température de 180 à 200 °C.
